# EUROPEAN PATENT APPLICATION

(11) **EP 4 753 032 A1**
(43) Date of publication of application: **03.06.2026**
(21) Application number: 23962078.4
(22) Date of filing: 29.12.2023
(51) Int. Cl.: H01M 50/105

(54) **POUCH BATTERY AND METHOD FOR MANUFACTURING POUCH BATTERY**

(30) Priority: 22.12.2023 CN 202311785877
(71) Applicant: Huizhou Liwinon New Energy Technology Co., Ltd., Boluo County, Huizhou Guangdong 516100 (CN)
(72) Inventor: LIAO, Yan, Yuanzhou Town, Boluo County Huizhou, Guangdong 516100 (CN); XIE, Anhe, Yuanzhou Town, Boluo County Huizhou, Guangdong 516100 (CN); WU, Shengben, Yuanzhou Town, Boluo County Huizhou, Guangdong 516100 (CN); CHEN, Jie, Yuanzhou Town, Boluo County Huizhou, Guangdong 516100 (CN)
(74) Representative: Patentwerk B.V.
(86) International application number: PCT/CN2023/143314
(87) International publication number: WO 2025/129756

(57) **Abstract**

Provided in the present invention are a pouch battery and a method for manufacturing a pouch battery. The pouch battery comprises a battery cell, an aluminum laminated film packaging structure and an adhesive layer, wherein the aluminum laminated film packaging structure comprises a main body portion and a sealing area; the main body portion is provided with a cavity, and a battery cell body is received in the cavity; and the sealing area is connected to an outer edge of the main body portion, encircles the main body portion circumferentially, and seals the cavity. An outer edge of the sealing area comprises a first side edge and a vent area, wherein part of a tab passes through the first side edge, part of the vent area is covered by the adhesive layer, and the remaining part of the vent area is exposed outside the adhesive layer. In the pouch battery of the present invention, a pressure relief portion is created at an outer edge of the aluminum laminated film packaging structure, thereby reducing the risk of explosion of the pouch battery.

## Description

### TECHNICAL FIELD

The present disclosure relates to the technical field of batteries, and more particularly to a pouch battery and a method for manufacturing same.

### BACKGROUND

At present, the safety issues of batteries are mainly manifested in fires, explosions, and other phenomena caused by thermal runaway. To reduce the risk of battery explosion, hard-shell batteries typically have an explosion-proof valve on the outer shell or top cover (which may be made of aluminum). When the pressure inside the battery is high, the explosion-proof valve is opened, allowing high-temperature gas inside the battery to be discharged, thereby preventing explosion.

However, the cell of a pouch battery is wrapped with an aluminum-plastic film, which is soft, making it difficult to mount an explosion-proof valve on the aluminum-plastic film. Therefore, pouch batteries in the existing technology do not have an explosion-proof valve, and the safety of the pouch batteries needs to be improved.

### SUMMARY

The present disclosure aims to resolve at least one of the technical problems in the existing technology. Therefore, the present disclosure provides a pouch battery that has a low risk of explosion and high safety.

The present disclosure also provides a method for manufacturing the pouch battery.

In accordance with the embodiments in a first aspect of the present disclosure, a pouch battery is provided, including a cell, an aluminum-plastic film packaging structure, and an adhesive layer, wherein the cell includes a cell main body and a tab connected to the cell main body, and the aluminum-plastic film packaging structure includes: a main body, internally provided with a cavity, and the cell main body is accommodated in the cavity; and a sealing area, connected to an outer edge of the main body, surrounding an entire perimeter of the main body, and configured to seal the cavity, wherein an outer edge of the sealing area includes a first side edge and a vent area, a part of the tab extends from the first side edge to outside of the aluminum-plastic film packaging structure, two ends of the vent area are respectively connected to two ends of the first side edge, a part of the vent area is covered by the adhesive layer, and a rest part of the vent area is exposed outside the adhesive layer.

The pouch battery according to the embodiments in the first aspect of the present disclosure at least has the following advantages. The sealing effect for the part of the vent area that is not covered with the adhesive layer is weaker than that for the part of the vent area that is covered with the adhesive layer. Therefore, when the temperature and pressure inside the cavity are high, the part of the vent area that is not covered by the adhesive layer will be blown open by high-temperature gas inside the cavity first, i.e., the seal of the part of the vent area that is not covered by the adhesive layer will fail first, and the high-temperature gas will be discharged outside the cavity. As the high-temperature gas is discharged, the pressure inside the cavity decreases, and the risk of explosion of the pouch battery decreases. According to the pouch battery of the present disclosure, a portion through which pressure can be relieved is configured on the outer edge of the aluminum-plastic film packaging structure, so that the risk of explosion of the pouch battery is reduced.

According to some embodiments of the present disclosure, the vent area includes a second side edge, a third side edge, and a fourth side edge, the third side edge is opposite to the first side edge, the second side edge is opposite to the fourth side edge, the second side edge and the fourth side edge are respectively located on two sides of the first side edge, and the adhesive layer covers the second side edge, the third side edge, and the fourth side edge; and the vent area further includes: a first connecting edge, wherein two ends of the first connecting edge are respectively connected to the first side edge and the second side edge, an angle between the first connecting edge and either the first side edge or the second side edge is an obtuse angle, and the first connecting edge is exposed outside the adhesive layer; and/or a second connecting edge, wherein two ends of the second connecting edge are respectively connected to the second side edge and the third side edge, an angle between the second connecting edge and either the second side edge or the third side edge is an obtuse angle, and the second connecting edge is exposed outside the adhesive layer; and/or a third connecting edge, wherein two ends of the third connecting edge are respectively connected to the third side edge and the fourth side edge, an angle between the third connecting edge and either the third side edge or the fourth side edge is an obtuse angle, and the third connecting edge is exposed outside the adhesive layer; and/or a fourth connecting edge, wherein two ends of the fourth connecting edge are respectively connected to the fourth side edge and the first side edge, an angle between the fourth connecting edge and either the first side edge or the fourth side edge is an obtuse angle, and the fourth connecting edge is exposed outside the adhesive layer.

According to some embodiments of the present disclosure, the vent area includes the first connecting edge, the second connecting edge, the third connecting edge, and the fourth connecting edge; and the sealing area is bent in such a manner that the first connecting edge, the second connecting edge, the third connecting edge, and the fourth connecting edge lie on a first plane; and at least one of the first side edge, the second side edge, the third side edge, and the fourth side edge lies in a second plane, wherein the first plane and the second plane are parallel to each other.

According to some embodiments of the present disclosure, the vent area includes a first connecting edge, and an angle between the second connecting edge and either the first side edge or the second side edge is 135°; and/or the vent area includes a second connecting edge, and an angle between the second connecting edge and either the second side edge or the third side edge is 135°; and/or the vent area includes a third connecting edge, and an angle between the second connecting edge and either the third side edge or the fourth side edge is 135°; and/or the vent area includes a fourth connecting edge, and an angle between the second connecting edge and either the fourth side edge or the first side edge is 135°.

According to some embodiments of the present disclosure, the cell is a laminated cell, the cell includes the first connecting edge, the second connecting edge, the third connecting edge, and the fourth connecting edge, the cell is provided with four chamfered corners, and the four chamfered corners are respectively arranged corresponding to the first connecting edge, the second connecting edge, the third connecting edge, and the fourth connecting edge.

According to some embodiments of the present disclosure, the adhesive layer is an insulator.

According to some embodiments of the present disclosure, the adhesive layer is a solidified ultraviolet-curing adhesive.

According to some embodiments of the present disclosure, the pouch battery further includes a separator and an electrolyte solution, the separator is located in the cavity, the cavity is separated into two sub-cavities by the separator, two cells are provided, the two cells are respectively arranged in different sub-cavities, a part of the electrolyte solution is contained in one of the sub-cavities, a rest part of the electrolyte solution is contained in the other sub-cavity, and the separator is configured to obstruct passage of the electrolyte solution.

According to some embodiments of the present disclosure, the aluminum-plastic film packaging structure is formed by a first aluminum-plastic film and a second aluminum-plastic film connected to each other, a central area of the first aluminum-plastic film and a central area of the second aluminum-plastic film are stacked to form the main body, and a peripheral area of the first aluminum-plastic film and a peripheral area of the second aluminum-plastic film are stacked together and are connected to each other to form the sealing area; and the pouch battery further includes a tab adhesive connected to the tab, wherein tab adhesive is sandwiched between the first aluminum-plastic film and the second aluminum-plastic film, and arranged at the first side edge.

In accordance with the embodiments in a second aspect of the present disclosure, a method for manufacturing a pouch battery is provided, including: placing a cell between a first aluminum-plastic film and a second aluminum-plastic film, and connecting a part of an edge of the first aluminum-plastic film and a part of an edge of the second aluminum-plastic film; introducing an electrolyte solution into the cell, and performing a first sealing on the first aluminum-plastic film and the second aluminum-plastic film; after the first sealing, performing formation, puncturing of a gas pocket, vacuumizing, a second sealing, and cutting of the gas pocket in sequence; after the gas pocket is cut off, connecting the first aluminum-plastic film and the second aluminum-plastic film to form an aluminum-plastic film packaging structure, wherein the aluminum-plastic film packaging structure includes a main body and a sealing area, the main body is internally provided with a cavity, the cell main body is accommodated in the cavity, the sealing area is connected to an outer edge of the main body, the sealing area surrounds an entire perimeter of the main body, the sealing area is configured to seal the cavity, an outer edge of the sealing area includes a first side edge and a vent area, a part of a tab of the cell extends from the first side edge to outside of the aluminum-plastic film packaging structure, and two ends of the vent area are respectively connected to two ends of the first side edge; and arranging an adhesive layer in the vent area, such that a part of the vent area is covered by the adhesive layer and a rest part of the vent area is exposed outside the adhesive layer.

The method for manufacturing the pouch battery according to the embodiments in the second aspect of the present disclosure at least has the following advantages. The above pouch battery with high safety can be manufactured by the method.

According to some embodiments of the present disclosure, the method for manufacturing the pouch battery further includes: after the gas pocket is cut off and before the adhesive layer is arranged, cutting four corners of the aluminum-plastic film packaging structure having a rectangular shape, such that the vent area includes a first connecting edge, a second side edge, a second connecting edge, a third side edge, a third connecting edge, a fourth side edge, and a fourth connecting edge connected in sequence, the third side edge is opposite to the first side edge, the second side edge is opposite to the fourth side edge, the second side edge and the fourth side edge are respectively located on two sides of the first side edge, an end of the first connecting edge away from the second side edge is connected to the first side edge, and an end of the fourth connecting edge away from the fourth side edge is connected to the first side edge; wherein the step of arranging the adhesive layer in the vent area includes: covering the second side edge, the third side edge, and the fourth side edge with the adhesive layer, and exposing at least one of the first connecting edge, the second connecting edge, the third connecting edge, and the fourth connecting edge outside the adhesive layer.

According to some embodiments of the present disclosure, the method for manufacturing the pouch battery further includes: after arranging the adhesive layer, bending the sealing area, such that the first connecting edge, the second connecting edge, the third connecting edge, and the fourth connecting edge lie on a first plane, and at least one of the first side edge, the second side edge, the third side edge, and the fourth side edge lies in a second plane, wherein the first plane and the second plane are parallel to each other.

According to some embodiments of the present disclosure, the method for manufacturing a pouch battery includes the following steps: preparing a cell assembly, wherein the cell assembly includes a separator, a first cell, a second cell, a first electrolyte solution, and a second electrolyte solution, the second electrolyte solution is the same as the first electrolyte solution, the first aluminum-plastic film and the separator are connected to each other to form a first space which is closed, the first space includes a first pocket area and a first gas pocket area which are communicated with each other, the first cell and the first electrolyte solution are located in the first pocket area, the first aluminum-plastic film and the second aluminum-plastic film are respectively arranged on different sides of the separator, the second aluminum-plastic film and the separator are connected to each other to form a second space which is closed, the separator is configured to prevent the first electrolyte solution from flowing from the first space to the second space, the separator is further configured to prevent the second electrolyte solution from flowing from the second space to the first space, the second space is separated from the first space, the second space includes a second pocket area and a second gas pocket area which are communicated with each other, the second cell and the second electrolyte solution are located in the second pocket area, and the first gas pocket area is staggered from the second gas pocket area; performing formation on the cell assembly; after the formation is completed, puncturing the first gas pocket area and vacuumizing the first space; after vacuumizing the first space, sealing the first pocket area; after the first pocket area is sealed, puncturing the second gas pocket area and vacuumizing the second space; after vacuumizing the second space, sealing the second pocket area and then cutting off the first gas pocket area and the second gas pocket area; and after cutting off the second gas pocket area, arranging an adhesive layer in a vent area, such that a part of the vent area is covered by the adhesive layer and a rest part of the vent area is exposed outside the adhesive layer, wherein after cutting off the second gas pocket area, the first aluminum-plastic film and the second aluminum-plastic film form an aluminum-plastic film packaging structure, wherein the aluminum-plastic film packaging structure includes a sealing area, an outer edge of the sealing area includes a first side edge and a vent area, a part of a tab of the first cell extends from the first side edge to outside of the aluminum-plastic film packaging structure, and two ends of the vent area are respectively connected to two ends of the first side edge.

According to some embodiments of the present disclosure, the cell assembly further includes a first isolation adhesive, the first isolation adhesive is connected to a side of the separator facing away from the first aluminum-plastic film, the first isolation adhesive is located at an end of the separator away from the first cell, and the first isolation adhesive has a melting point higher than a melting point of a heat-sealing layer of the first aluminum-plastic film.

According to some embodiments of the present disclosure, the cell assembly includes a second isolation adhesive, and the second isolation adhesive has a melting point higher than a melting point of a heat-sealing layer of the second aluminum-plastic film, wherein one second isolation adhesive is provided, and the second isolation adhesive is connected to a side of the first aluminum-plastic film facing the separator and is located at an end of a first overlapping portion away from the first cell; or one second isolation adhesive is provided, and the second isolation adhesive is connected to a side of the separator facing the first aluminum-plastic film and is located at an end of the second overlapping portion away from the first cell; or two second isolation adhesives are provided, the two second isolation adhesives are overlapped with each other, one of the second isolation adhesives is connected to a side of the first aluminum-plastic film facing the separator and is located at an end of the first overlapping portion away from the first cell, and the other of the second isolation adhesives is connected to a side of the separator facing the first aluminum-plastic film and is located at an end of the second overlapping portion away from the first cell.

According to some embodiments of the present disclosure, the cell assembly further includes a third isolation adhesive, the third isolation adhesive has a melting point higher than the melting point of the heat-sealing layer of the second aluminum-plastic film, and the second pocket area, the third isolation adhesive, and the second isolation adhesive are sequentially arranged at intervals along the third direction, wherein one third isolation adhesive is provided, and the third isolation adhesive is connected to a side of the separator facing the second aluminum-plastic film; or one third isolation adhesive is provided, and the third isolation adhesive is connected to a side of the second aluminum-plastic film facing the separator; or two third isolation adhesives are provided, the two third isolation adhesives are overlapped with each other, one of the third isolation adhesives is connected to a side of the separator facing the second aluminum-plastic film, and the other of the third isolation adhesives is connected to a side of the second aluminum-plastic film facing the separator.

According to some embodiments of the present disclosure, the method for manufacturing the pouch battery includes the following steps: preparing a cell assembly, wherein the cell assembly includes a separator, a first cell, a second cell, a first electrolyte solution, and a second electrolyte solution, the second electrolyte solution is the same as the first electrolyte solution, a first aluminum-plastic film and the separator are connected to each other to form a first space which is closed, the first space includes a first pocket area and a first gas pocket area which are communicated with each other, the first cell and the first electrolyte solution are located in the first pocket area, the first aluminum-plastic film and the second aluminum-plastic film are respectively arranged on different sides of the separator, the second aluminum-plastic film and the separator are connected to each other to form a second space which is closed, the separator is configured to prevent the first electrolyte solution from flowing from the first space to the second space, the separator is further configured to prevent the second electrolyte solution from flowing from the second space to the first space, the second space is separated from the first space, the second space includes a second pocket area and a second gas pocket area which are communicated with each other, the second cell and the second electrolyte solution are located in the second pocket area, and the first gas pocket area is staggered from the second gas pocket area; performing formation on the cell assembly; after the formation is completed, puncturing the first gas pocket area and vacuumizing the first space; after vacuumizing the first space, sealing the first pocket area and then cutting off the first gas pocket area; after the first gas pocket area is cut off, puncturing the second gas pocket area and vacuumizing the second space; after vacuumizing the second space, sealing the second pocket area and then cutting off the second gas pocket area; and after cutting off the second gas pocket area, arranging an adhesive layer in a vent area, such that a part of the vent area is covered by the adhesive layer and a rest part of the vent area is exposed outside the adhesive layer, wherein after cutting off the second gas pocket area, the first aluminum-plastic film and the second aluminum-plastic film form an aluminum-plastic film packaging structure, wherein the aluminum-plastic film packaging structure includes a sealing area, an outer edge of the sealing area includes a first side edge and a vent area, a part of a tab of the first cell extends from the first side edge to outside of the aluminum-plastic film packaging structure, and two ends of the vent area are respectively connected to two ends of the first side edge.

Additional aspects and advantages of the present disclosure will be partly illustrated in the description below and part of the aspects and advantages are apparent from the description below, or understood through practice of the present disclosure.

### BRIEF DESCRIPTION OF THE DRAWINGS

The present disclosure is further described below with reference to the accompanying drawings and embodiments. In the drawings:
FIG. 1 is a schematic diagram of a pouch battery according to a first embodiment of the present disclosure;
FIG. 2 is a sectional view of the pouch battery in FIG. 1 taken along line A-A;
FIG. 3 is a sectional view of the pouch battery in FIG. 1 taken along line B-B;
FIG. 4 is a sectional view of the pouch battery in FIG. 1 taken along line C-C;
FIG. 5 is a sectional view of a pouch battery according to a second embodiment of the present disclosure;
FIG. 6 is an exploded view of a pouch battery according to a third embodiment of the present disclosure;
FIG. 7 is a schematic diagram of a method for manufacturing a pouch battery according to an embodiment of the present disclosure;
FIG. 8 is a schematic diagram of a cell assembly according to an embodiment of the present disclosure;
FIG. 9 is a schematic diagram of the cell assembly when a first gas pocket area is punctured;
FIG. 10 is a schematic diagram of the cell assembly after a first pocket area is sealed;
FIG. 11 is a schematic diagram of the cell assembly when a second gas pocket area is punctured;
FIG. 12 is a schematic diagram of the cell assembly after a second pocket area is sealed;
FIG. 13 is a schematic diagram of the cell assembly when the first gas pocket area and the second gas pocket area are cut off; and
FIG. 14 is an exploded view of the cell assembly shown in FIG. 8.

### Reference numerals:

100 - pouch battery, 101 - aluminum-plastic film packaging structure, 102 - main body, 103 - sealing area, 104 - first side edge, 105 - first connecting edge, 106 - second side edge, 107 - second connecting edge, 108 - third side edge, 109 - third connecting edge, 110 - fourth side edge, 111 - fourth connecting edge, 112 - cell, 113 - cell main body, 114 - tab, 115 - tab adhesive, 116 - adhesive layer, 117 - chamfered corner, 118 - first aluminum-plastic film, 119 - second aluminum-plastic film, 120 - cavity, 121 - first cell, 122 - second cell, 123 - separator;
201 - first plane, 202 - second plane;
301 - first space, 302 - first pocket area, 303 - first gas pocket area, 304 - second space, 305 - second pocket area, 306 - second gas pocket area;
401 - first overlapping portion, 402 - first peripheral portion, 403 - second overlapping portion, 404 - second peripheral portion, 405 - first isolation adhesive, 406 - second isolation adhesive, 407 - third isolation adhesive;
501 - first straight line, 502 - second straight line.

### DETAILED DESCRIPTION

Embodiments of the present disclosure will be described in detail hereinafter in conjunction with accompanying drawings in which the same or like reference numerals refer to the same or like elements or elements having the same or like functions throughout. The embodiments described below by reference to the accompanying drawings are illustrative and are intended for illustrating only and are not to be construed as limiting the present disclosure.

In the description of the present disclosure, it should be understood that for the description of orientations, the orientation or positional relationships indicated by the terms such as "upper," "lower," "front," "rear," "left," "right," and the like are based on orientation or positional relationships shown in the accompanying drawings, and are used only for ease and brevity of illustration and description, rather than indicating or implying that the mentioned apparatus or element must have a particular orientation or must be constructed and operated in a particular orientation. Therefore, such terms should not be construed as limiting the present disclosure.

In the description of the present disclosure, the term "several" means one or more, the term "plurality of" (or multiple) means two or more, the term such as "greater than," "less than," "exceed" or variants thereof prior to a number or series of numbers is understood to not include the number. The terms "above," "below," and "within" prior to a number or series of numbers is understood to include the number. If used herein, the terms such as "first," "second," and the like are merely used for distinguishing technical features, and are not intended to indicate or imply relative importance, or implicitly point out the number of the indicated technical features, or implicitly point out the precedence order of the indicated technical features.

In the description of the present disclosure, unless otherwise explicitly defined, the terms such as "arrange," "install/mount" and "connect" should be understood in a broad sense, and those having ordinary skills in the art can reasonably determine the specific meanings of the above terms in the present disclosure based on the specific contents of the technical solution.

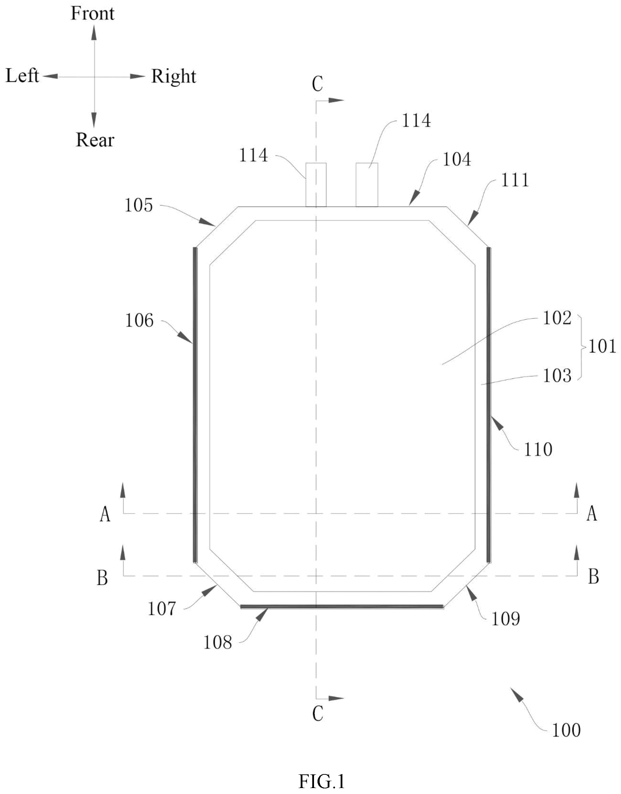

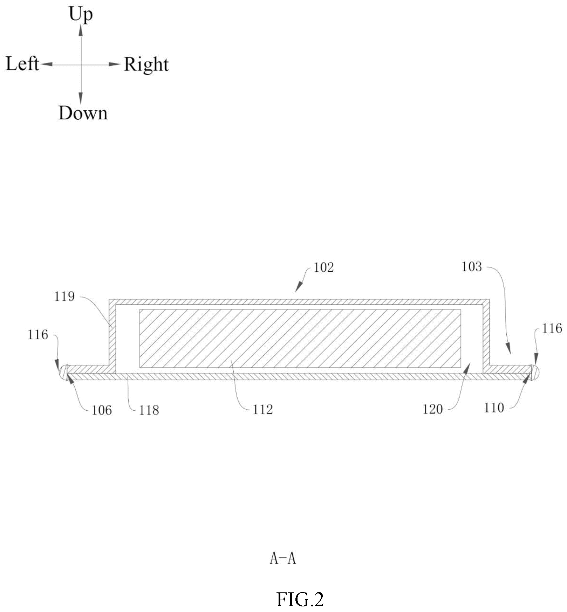

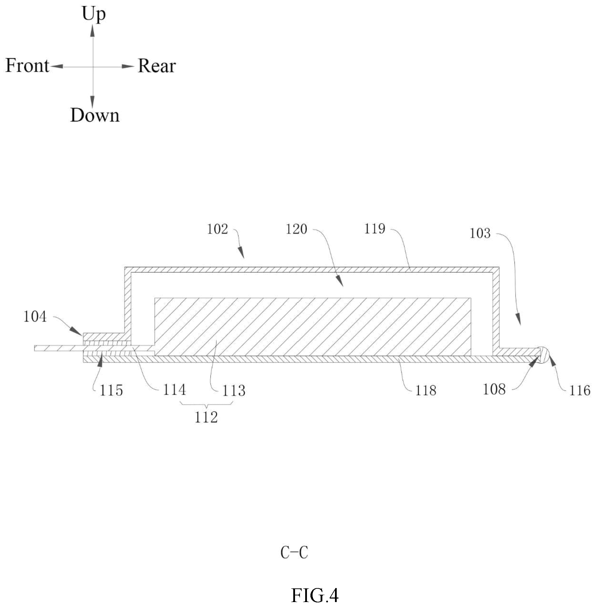

FIG. 1 shows a pouch battery 100 according to a first embodiment of the present disclosure. FIG. 2 to FIG. 4 are sectional views of the pouch battery 100 of the first embodiment taken along different lines. The pouch battery 100 includes a cell 112, an aluminum-plastic film packaging structure 101, and an adhesive layer 116. As shown in FIG. 4, the cell 112 includes a cell main body 113 and a tab 114 which are connected to each other. The cell 112 may be configured as a laminated cell or a wound cell. If the cell 112 is a laminated cell, the cell main body 113 is formed by stacking of a positive electrode sheet, an insulating separator, and a negative electrode sheet. If the cell 112 is a wound cell, the cell main body 113 is formed by stacking and winding of a positive electrode sheet, an insulating separator, and a negative electrode sheet.

As shown in FIG. 1 and FIG. 2, the aluminum-plastic film packaging structure 101 includes a first aluminum-plastic film 118 and a second aluminum-plastic film 119 stacked together. A central area of the first aluminum-plastic film 118 and a central area of the second aluminum-plastic film 119 are stacked to form the main body 102. A peripheral area of the first aluminum-plastic film 118 and a peripheral area of the second aluminum-plastic film 119 are stacked and connected to each other to form a sealing area 103. In some other embodiments, the aluminum-plastic film packaging structure 101 may include only one aluminum-plastic film, and after the aluminum-plastic film is folded in half, the two halves of the aluminum-plastic film are connected to each other to form the main body 102 and the sealing area 103.

As shown in FIG. 2, the main body 102 is internally provided with a cavity 120, and the cell body 113 is accommodated in the cavity 120. The pouch battery 100 further includes an electrolyte solution (not shown), which is also accommodated in the cavity 120 and is in contact with the cell 112. As shown in FIG. 1, the sealing area 103 is connected to an outer edge of the main body 102, the sealing area 103 surrounds an entire perimeter of the main body 102, and the sealing area 103 is configured to seal the cavity 120. Sealing the cavity 120 means separating the cavity 120 from an external environment (e.g., the atmospheric environment), to prevent leakage of the electrolyte solution into the external environment.

A part of the first aluminum-plastic film 118 which is located on the sealing area 103 is adhered to a part of the second aluminum-plastic film 119 which is located on the sealing area 103 to seal the cavity 120. The first aluminum-plastic film 118 and the second aluminum-plastic film 119 each include a heat-sealing layer (not shown), which is made of polypropylene (PP). The heat-sealing layer of the first aluminum-plastic film 118 is located on a side of the first aluminum-plastic film 118 facing the second aluminum-plastic film 119. The heat-sealing layer of the second aluminum-plastic film 119 is located on a side of the second aluminum-plastic film 119 facing the first aluminum-plastic film 118. When the first aluminum-plastic film 118 and the second aluminum-plastic film 119 are pressed together and heated, the heat-sealing layers can be melted. After the heating is stopped, the heat-sealing layers solidify, so that the first aluminum-plastic film 118 and the second aluminum-plastic film 119 are adhered together.

As shown in FIG. 1, an outer edge of the sealing area 103 includes a first side edge 104 and a vent area, and a part of the tab 114 extends from the first side edge 104 to outside of the aluminum-plastic film packaging structure 101. Two ends of the vent area are respectively connected to two ends of the first side edge 104. A part of the vent area is covered by the adhesive layer 116, and a rest part of the vent area is exposed outside the adhesive layer 116. "Exposed outside the adhesive layer 116" means not covered by the adhesive layer 116. In this embodiment, the vent area includes a first connecting edge 105, a second side edge 106, a second connecting edge 107, a third side edge 108, a third connecting edge 109, a fourth side edge 110, and a fourth connecting edge 111 connected in sequence. One end of the vent area is a front end of the first connecting edge 105, and is connected to a left end of the first side edge 104. The other end of the vent area is a front end of the fourth connecting edge 111, and is connected to a right end of the first side edge 104.

In addition to the heat-sealing layers of the aluminum-plastic films, the adhesive layer 116 also has an adhesive effect on an edge of the first aluminum-plastic film 118 and an edge of the second aluminum-plastic film 119. As such, the adhesive layer 116 is conducive to improving the sealing of the aluminum-plastic film packaging structure 101.

The sealing effect for the part of the vent area that is not covered with the adhesive layer 116 is weaker than that for the part of the vent area that is covered with the adhesive layer 116. Therefore, when the temperature and pressure inside the cavity 120 are high, the part of the vent area that is not covered by the adhesive layer 116 will be blown open by high-temperature gas in the cavity 120 first, i.e., the seal of the part of the vent area that is not covered by the adhesive layer 116 will fail first, and the high-temperature gas will be discharged outside the cavity 120. As the high-temperature gas is discharged, the pressure inside the cavity 120 decreases, and the risk of explosion of the pouch battery 100 decreases. According to the pouch battery 100 of the present disclosure, a portion through which pressure can be relieved is configured on the outer edge of the aluminum-plastic film packaging structure 101, so that the risk of explosion of the pouch battery 100 is reduced.

The part of the vent area that needs to be covered by the adhesive layer 116 and the part of the vent area that needs to be exposed outside the adhesive layer 116 will be described below.

As shown in FIG. 1, the vent area includes a second side edge 106, a third side edge 108, and a fourth side edge 110, the third side edge 108 is opposite to the first side edge 104, the second side edge 106 is opposite to the fourth side edge 110, and the second side edge 106 and the fourth side edge 110 are respectively located on two sides of the first side edge 104. The adhesive layer 116 covers the second side edge 106, the third side edge 108, and the fourth side edge 110. The first side edge 104 and the second side edge 106 may be perpendicular to each other, the second side edge 106 and the fourth side edge 110 may be parallel to each other, and the first side edge 104 and the third side edge 108 may be parallel to each other. Referring to FIG. 2 and FIG. 4, the second side edge 106, the third side edge 108, and the fourth side edge 110 are all covered by the adhesive layer 116.

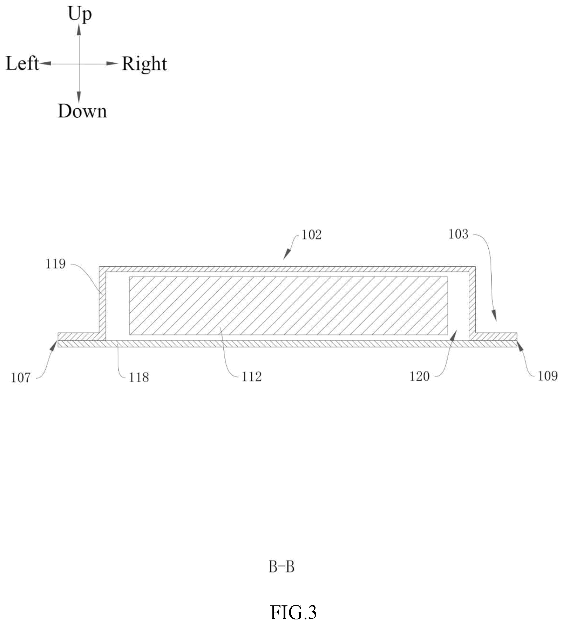

As shown in FIG. 1, the vent area further includes a first connecting edge 105, a second connecting edge 107, a third connecting edge 109, and a fourth connecting edge 111. Two ends of the first connecting edge 105 are respectively connected to the first side edge 104 and the second side edge 106. An angle between the first connecting edge 105 and either the first side edge 104 or the second side edge 106 is an obtuse angle. Two ends of the second connecting edge 107 are respectively connected to the second side edge 106 and the third side edge 108. An angle between the second connecting edge 107 and either the second side edge 106 or the third side edge 108 is an obtuse angle. Two ends of the third connecting edge 109 are respectively connected to the third side edge 108 and the fourth side edge 110. An angle between the third connecting edge 109 and either the third side edge 108 or the fourth side edge 110 is an obtuse angle. Two ends of the fourth connecting edge 111 are respectively connected to the fourth side edge 110 and the first side edge 104. An angle between the fourth connecting edge 111 and either the first side edge 104 or the fourth side edge 110 is an obtuse angle. As shown in FIG. 3, the second connecting edge 107 and the third connecting edge 109 are not provided with the adhesive layer 116. Similarly, the second connecting edge 107 and the fourth connecting edge 111 are not provided with the adhesive layer 116.

In some other embodiments, the vent area may not include the first connecting edge 105 to the fourth connecting edge 111, but may include at least one of the first connecting edge 105, the second connecting edge 107, the third connecting edge 109, and the fourth connecting edge 111.

Such a configuration of the vent area is advantageous in that when the part of the vent area that is not covered by the adhesive layer 116 is blown open by the high-temperature gas, the open part of the aluminum-plastic film packaging structure 101 is small and is mainly located at a corner of the pouch battery 100.

To facilitate processing and improve aesthetics, the angle between the second connecting edge 107 and either the first side edge 104 or the second side edge 106 is 135°. Similarly, the angle between the second connecting edge 107 and either the second side edge 106 or the third side edge 108 is 135°. The angle between the second connecting edge 107 and either the third side edge 108 or the fourth side edge 110 is 135°. The angle between the second connecting edge 107 and either the fourth side edge 110 or the first side edge 104 is 135°.

It should be noted that the first side edge 104 is not covered by the adhesive layer 116. As shown in FIG. 3, the pouch battery 100 further includes a tab adhesive 115 connected to the tab 114, wherein tab adhesive is sandwiched between the first aluminum-plastic film 118 and the second aluminum-plastic film 119, and arranged at the first side edge 104. The tab adhesive 115 can enhance the sealing between the aluminum-plastic film packaging structure 101 and the tab 114, and reduce the risk of leakage of the electrolyte solution from the first side edge 104. Due to the presence of the tab adhesive 115, the connection between the first aluminum-plastic film 118 and the second aluminum-plastic film 119 is relatively firm at the first side edge 104, the high-temperature gas in the cavity 120 does not easily blow the first side edge 104 open, and the high-temperature gas is mainly discharged through the part of the vent area that is not covered by the adhesive layer 116. Because the high-temperature gas in the cavity 120 does not easily blow the first side edge 104 open, the high-temperature gas is not directly discharged to the vicinity of the tab 114, which is conducive to improving the safety of an electrical device connected to the tab 114.

The adhesive layer 116 may be configured as an insulator. As such, the adhesive layer 116 can wrap a part of an edge of the aluminum-plastic film packaging structure 101, to reduce the risk of exposure of an aluminum layer of the aluminum-plastic film packaging structure 101, thereby reducing the risk of short circuit between the pouch battery 100 and an external object.

The adhesive layer 116 may be configured as a solidified ultraviolet-curing adhesive. A main component of the ultraviolet-curing adhesive is acrylate. The configuration of the adhesive layer 116 as the ultraviolet-curing adhesive is conducive to improving the manufacturing efficiency of the pouch battery 100. Specifically, In the manufacturing process of the pouch battery 100, manufacturing personnel may first apply the ultraviolet-curing adhesive that has not solidified to the part of the vent area to which the adhesive needs to be applied, and then irradiate the ultraviolet-curing adhesive with ultraviolet light to accelerate the curing of the ultraviolet-curing adhesive, thereby improving the formation speed of the adhesive layer 116 and improving the manufacturing efficiency of the pouch battery 100.

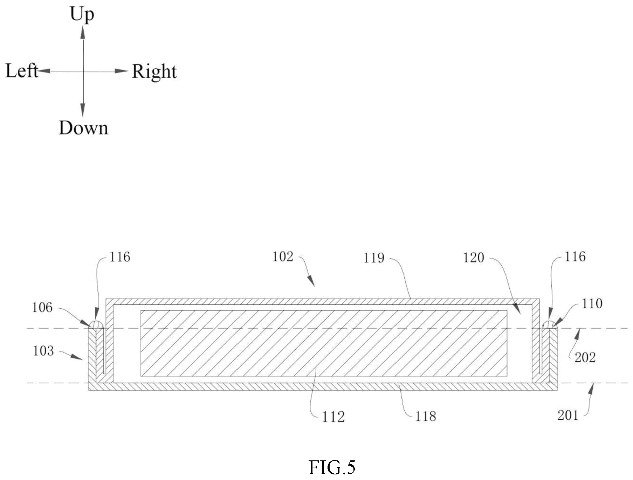

FIG. 5 shows a pouch battery 100 according to a second embodiment of the present disclosure. In the second embodiment, the sealing area 103 is bent. The bent sealing area 103 satisfies that: the first connecting edge 105, the second connecting edge 107, the third connecting edge 109, and the fourth connecting edge 111 lie on a first plane 201, and at least one of the first side edge 104, the second side edge 106, the third side edge 108, and the fourth side edge 110 lies in a second plane 202, the first plane 201 and the second plane 202 are parallel to each other. The bent sealing area 103 can reduce the space occupied by the pouch battery 100, and can also increase the resistance to prevent the high-temperature gas in the cavity 120 from flowing to the second side edge 106, the third side edge 108, and the fourth side edge 110, so that the high-temperature gas mainly flows to and is discharged from the connecting edges.

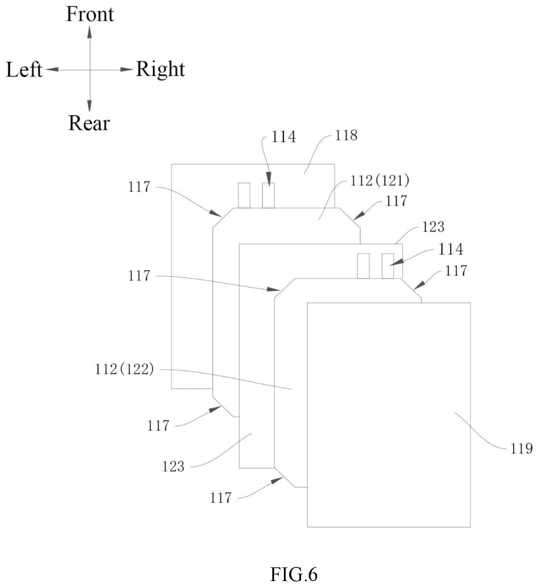

FIG. 6 shows a pouch battery 100 according to a third embodiment of the present disclosure, wherein the cell 112 is a laminated cell, the cell 112 is provided with four chamfered corners 117, and the four chamfered corners 117 are respectively arranged corresponding to the first connecting edge 105, the second connecting edge 107, the third connecting edge 109, and the fourth connecting edge 111. Through the arrangement of the chamfered corners 117, an outer edge of the cell 112 can better match the shape of the cavity 120, and a gap between the cell 112 and a wall surface of the cavity 120 is smaller, which is conducive to improving the energy density of the pouch battery 100.

As shown in FIG. 6, the pouch battery 100 further includes a separator 123, the separator 123 is located in the cavity 120, and the cavity 120 is separated into two sub-cavities by the separator 123. The pouch battery 100 includes two cells 112, namely, a first cell 121 and a second cell 122. The two cells 112 are respectively arranged in different sub-cavities, a part of the electrolyte solution is contained in one of the sub-cavities, a rest part of the electrolyte solution is contained in the other sub-cavity, and the separator 123 made of a polymer material (e.g., plastic) is used to obstruct passage of the electrolyte solution. The pouch battery 100 including the two cells 112 has a high energy density.

In the third embodiment, because the pouch battery 100 further includes the separator 123, the first aluminum-plastic film 118 and the second aluminum-plastic film 119 are not directly adhered. The peripheral area of the first aluminum-plastic film 118 is adhered to a peripheral area of the separator 123 to form one of the sub-cavities between a central area of the first aluminum-plastic film 118 and a central area of the separator 123. The peripheral area of the second aluminum-plastic film 119 is adhered to the peripheral area of the separator 123 to form the other sub-cavity between a central area of the second aluminum-plastic film 119 and the central area of the separator 123.

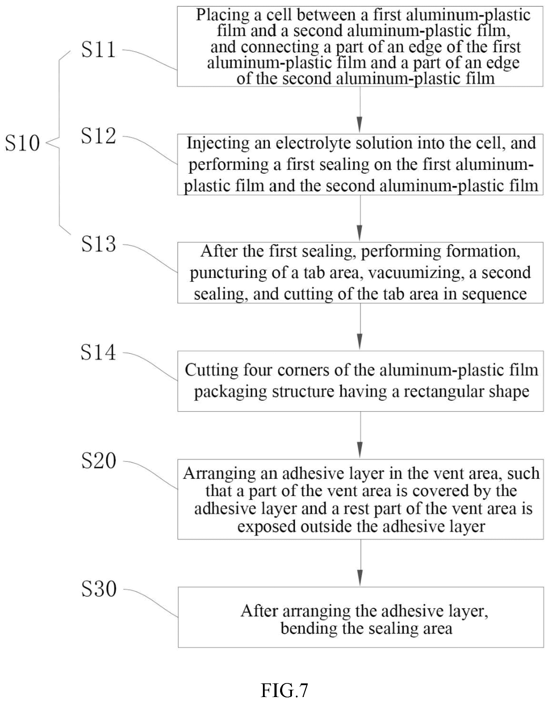

A method for manufacturing a pouch battery 100 will be described below. As shown in FIG. 7, the method for manufacturing a pouch battery 100 includes the following steps.

S10, preparing a cell assembly. The prepared cell assembly includes a cell 112 and an aluminum-plastic film packaging structure 101 (wherein the cell assembly does not include an adhesive layer 116). The specific shapes and structures of the cell 112 and the aluminum-plastic film packaging structure 101 are as described above.

S20, arranging an adhesive layer 116 in the vent area, such that a part of the vent area is covered by the adhesive layer 116, and a rest part of the vent area is exposed outside the adhesive layer 116.

In S20, the adhesive layer 116 is formed as follows: an adhesive is applied to a certain part of the vent area manually by manufacturing personnel or automatically by an automated device, and after the adhesive solidifies, the adhesive layer 116 is obtained.

As shown in FIG. 7, if the pouch battery 100 to be manufactured includes only one cell 112, the step of manufacturing the cell assembly (i.e., S10) includes the following steps.

S11, placing the cell 112 between a first aluminum-plastic film 118 and a second aluminum-plastic film 119, and connecting a part of an edge of the first aluminum-plastic film 118 and a part of an edge of the second aluminum-plastic film 119.

S12, introducing an electrolyte solution into the cell 112, and performing a first sealing on the first aluminum-plastic film 118 and the second aluminum-plastic film 119.

S 13, after the first sealing, performing formation, puncturing of a gas pocket, vacuumizing, a second sealing, and cutting of the gas pocket in sequence.

After the gas pocket is cut off, the cell assembly can be obtained. S11 may further include: respectively connecting a front side edge, a left side edge, and a rear side edge of the first aluminum-plastic film 118 to a front side edge, a left side edge, and a rear side edge of the second aluminum-plastic film 119, wherein a right side edge of the first aluminum-plastic film 118 is not connected to a right side edge of the second aluminum-plastic film 119, thus forming an opening. Correspondingly, in S12, the electrolyte solution is introduced between the first aluminum-plastic film 118 and the second aluminum-plastic film 119 through the opening, and is introduced into the cell 112; and after the introduction of the electrolyte solution is completed, the right side edge of the first aluminum-plastic film 118 is connected to the right side edge of the second aluminum-plastic film 119, i.e., the "first sealing". The steps of formation, puncturing of the gas pocket, vacuumizing, a second sealing, and cutting of the gas pocket in S13 are techniques well known in the art, and therefore will not be described in detail herein. The method of connecting edges of two aluminum-plastic films has been described above, so the details will not be repeated herein.

As shown in FIG. 7, in an embodiment, the method for manufacturing a pouch battery 100 further includes the following step.

S14, after the gas pocket is cut off and before the adhesive layer 116 is arranged, four corners of the aluminum-plastic film packaging structure 101 having a rectangular shape are cut, such that the vent area includes a first connecting edge 105, a second side edge 106, a second connecting edge 107, a third side edge 108, a third connecting edge 109, a fourth side edge 110, and a fourth connecting edge 111 connected in sequence.

Correspondingly, arranging the adhesive layer 116 in the vent area in S20 includes the following steps: covering the second side edge 106, the third side edge 108, and the fourth side edge 110 with the adhesive layer 116, and exposing at least one of the first connecting edge 105, the second connecting edge 107, the third connecting edge 109, and the fourth connecting edge 111 outside the adhesive layer 116.

As shown in FIG. 7, in an embodiment, the method for manufacturing a pouch battery 100 further includes the following step.

S30, after arranging the adhesive layer 116, bending the sealing area 103, such that the first connecting edge 105, the second connecting edge 107, the third connecting edge 109, and the fourth connecting edge 111 lie on a first plane 201, and at least one of the first side edge 104, the second side edge 106, the third side edge 108, and the fourth side edge 110 lies in a second plane 202, wherein the first plane 201 and the second plane 202 are parallel to each other.

By such a configuration, a part of the sealing area 103 is bent. The bent sealing area 103 can reduce the space occupied by the pouch battery 100, and can also increase the resistance to prevent the high-temperature gas in the cavity 120 from flowing to the second side edge 106, the third side edge 108, and the fourth side edge 110, so that the high-temperature gas mainly flows to and is discharged from the connecting edges.

Described above is a method for manufacturing a pouch battery 100 including only one cell 112. A method for manufacturing a pouch battery 100 including a separator 123 and two cells 112 is slightly different from the method described above. A method for manufacturing a pouch battery 100 including two cells 112 will be described below.

For a pouch battery 100 including two cells 112, in an embodiment, the method for manufacturing a pouch battery 100 includes the following steps.

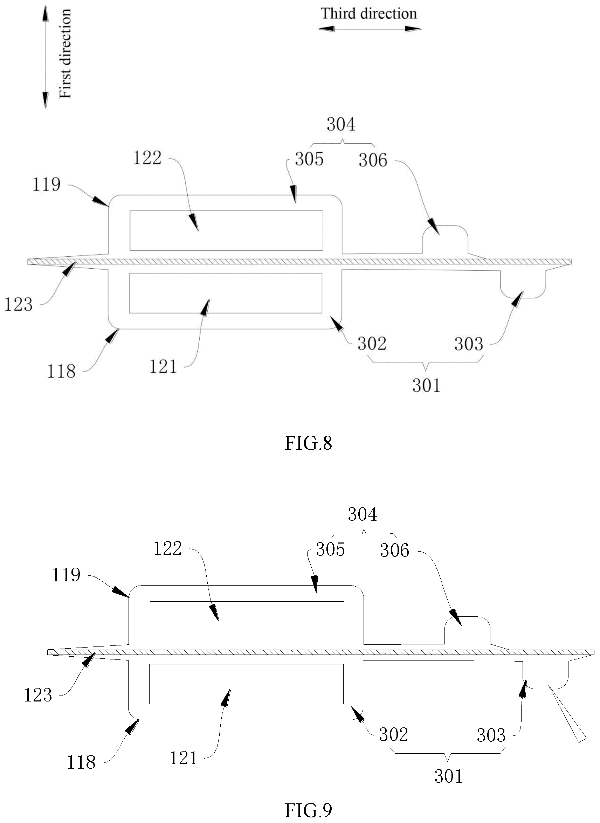

S40, preparing a cell assembly. As shown in FIG. 8, the prepared cell assembly includes a separator 123, a first cell 121, a second cell 122, a first electrolyte solution, and a second electrolyte solution. The second electrolyte solution is the same as the first electrolyte solution. The first aluminum-plastic film 118 and the separator 123 are connected to each other to form a first space 301 which is closed. The first space 301 includes a first pocket area 302 and a first gas pocket area 303 which are communicated with each other. The first cell 121 and the first electrolyte solution are located in the first pocket area 302. The first aluminum-plastic film 118 and the second aluminum-plastic film 119 are respectively arranged on different sides of the separator 123. The second aluminum-plastic film 119 and the separator 123 are connected to each other to form a second space 304 which is closed. The separator 123 is configured to prevent the first electrolyte solution from flowing from the first space 301 to the second space 304. The separator 123 is further configured to prevent the second electrolyte solution from flowing from the second space 304 to the first space 301. The second space 304 is separated from the first space 301. The second space 304 includes a second pocket area 305 and a second gas pocket area 306 which are communicated with each other. The second cell 122 and the second electrolyte solution are located in the second pocket area 305. The first gas pocket area 303 is staggered from the second gas pocket area 306.

S41, performing a formation on the cell assembly.

S42, after the formation is completed, puncturing the first gas pocket area 303 (as shown in FIG. 9) and vacuumizing the first space 301.

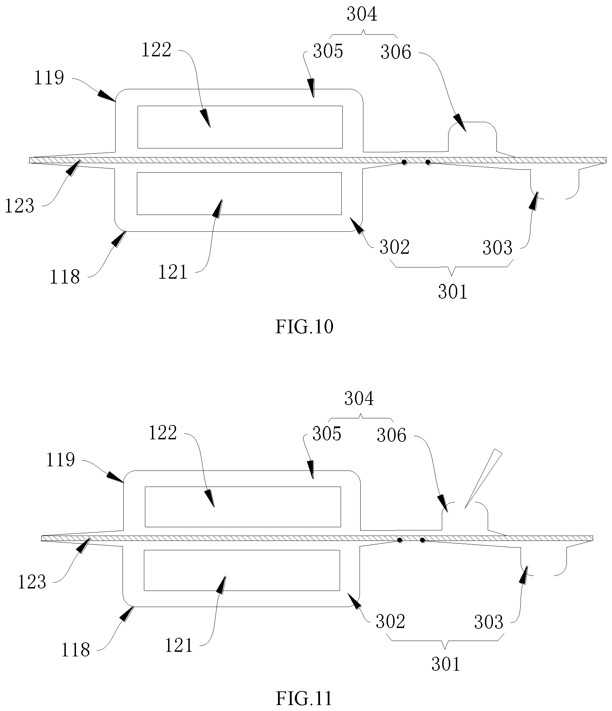

S43, after vacuumizing the first space 301, sealing the first pocket area 302 (as shown in FIG. 10).

S44, after sealing the first pocket area 302, puncturing the second gas pocket area 306 (as shown in FIG. 11) and vacuumizing the second space 304.

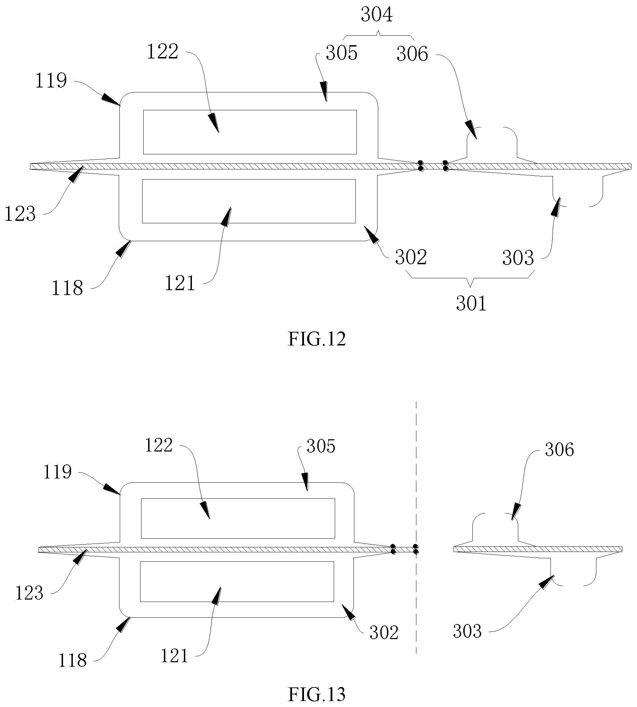

S45, after vacuumizing the second space 304, sealing the second pocket area 305 (as shown in FIG. 12) and then cutting off the first gas pocket area 303 and the second gas pocket area 306 (as shown in FIG. 13). After cutting off the second gas pocket area 306, the first aluminum-plastic film 118 and the second aluminum-plastic film 119 form an aluminum-plastic film packaging structure 101. The specific structure of the aluminum-plastic film packaging structure 101 is as described above.

S46, after cutting off the second gas pocket area 306, arranging an adhesive layer 116 in a vent area, such that a part of the vent area is covered by the adhesive layer 116, and a rest part of the vent area is exposed outside the adhesive layer 116.

The pouch battery 100 manufactured by the method of this embodiment (steps S40 to S46) has a low risk of explosion and high safety. Moreover, in this embodiment, the first gas pocket area 303 is staggered from the second gas pocket area 306, and when the first gas pocket area 303 is punctured, the second gas pocket area 306 can still remain intact (i.e., is not punctured). As such, when the first space 301 is subsequently vacuumized, only the electrolyte solution in the first space 301 will flow out of the aluminum-plastic film packaging structure 101, and the electrolyte solution in the second space 304 will not flow out. This allows a user to determine electrolyte solution retention coefficients of the first cell 121 and the second cell 122 respectively. In addition, because the first gas pocket area 303 and the second gas pocket area 306 are cut off simultaneously in the method, a high production efficiency is achieved.

The electrolyte solution retention coefficient is a ratio of the mass of the electrolyte solution finally adsorbed by the cell 112 to the mass of the electrolyte solution initially introduced into the cell 112. The electrolyte solution retention coefficient may be measured or determined by: measuring a total weight of the cell 112 before electrolyte solution introduction, measuring a total weight of the cell 112 after the vacuumizing is completed, and calculating a difference between the two total weights as the electrolyte solution retention coefficient of the cell 112.

A subpar electrolyte solution retention coefficient may reduce the safety of the pouch battery 100. If the electrolyte solution retention coefficient of a cell 112 is too high, a large number of side reactions occur when the cell 112 reacts with the electrolyte solution, wherein the cell 112 is more likely to generate gas, and the battery is more likely to swell or even explode. In the above method, the two gas pockets are arranged staggered from each other, so that manufacturing personnel can conveniently determine the electrolyte solution retention coefficient of each cell 112 and determine whether the safety of the cell 112 reaches a criterion, to prevent the manufacturing personnel from determining a cell with subpar safety as a standard-compliant product. By the above method, the two gas pockets are arranged staggered from each other, and the adhesive layer 116 is used to construct a part through which pressure can be relieved, so that the battery has high safety.

For the cell assembly manufactured by S40, the first gas pocket area 303 and the second gas pocket area 306 may be arranged at intervals from each other in a third direction, and the first gas pocket area 303 and the second gas pocket area 306 may be located on the same side of the first cell 121. Alternatively, the first gas pocket area 303 and the second gas pocket area 306 are arranged at intervals from each other in a third direction, and the first gas pocket area 303 and the second gas pocket area 306 are located on different sides of the first cell 121. Alternatively, the first gas pocket area 303 and the second gas pocket area 306 are arranged at intervals from each other in a second direction, and the first gas pocket area 303 and the second gas pocket area 306 are located on the same side of the first cell 121.

The first cell 121 and the second cell 122 are stacked in the first direction, the tab 114 of the first cell 121 is located at one end of the first cell 121 in the second direction, and any two of the first direction, the second direction, and the third direction are perpendicular to each other. The first direction corresponds to an up-down direction. The second direction corresponds to a front-rear direction. The third direction corresponds to a left-right direction.

The methods for manufacturing the cell assembly 112 in S40 is described below.

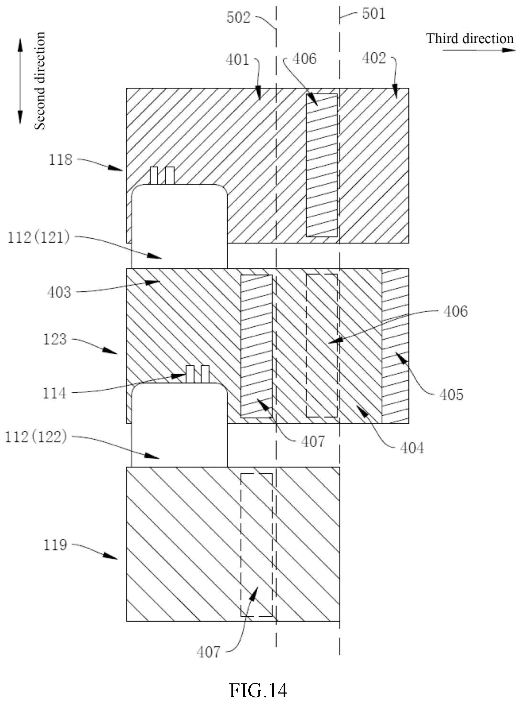

As shown in FIG. 14, the first aluminum-plastic film 118 includes a first overlapping portion 401 and a first peripheral portion 402 connected in sequence in a third direction. A part of the first aluminum-plastic film 118 located on a left side of a first straight line 501 is the first overlapping portion 401, a part of the first aluminum-plastic film 118 located on a right side of the first straight line 501 is the first peripheral portion 402, and both the first overlapping portion 401 and the first peripheral portion 402 are rectangular. The separator 123 includes a second overlapping portion 403 and a second peripheral portion 404 connected in sequence in a third direction. A part of the separator 123 located on the left side of the first straight line 501 is the second overlapping portion 403, a part of the separator 123 located on the right side of the first straight line 501 is the second peripheral portion 404, and both the second overlapping portion 403 and the second peripheral portion 404 are rectangular. The first overlapping portion 401 and the second overlapping portion 403 are overlapped with each other, and the first peripheral portion 402 and the second peripheral portion 404 are overlapped with each other. An edge of the first aluminum-plastic film 118 is connected to an edge of the separator 123 to form a first space 301, and a part of the first space 301 between the first peripheral portion 402 and the second peripheral portion 404 is the first gas pocket area 303. A part of the first space 301 between the first overlapping portion 401 and the second overlapping portion 403 includes the first pocket area 302 and a transition area. As shown in FIG. 14, the transition area is a part of the first space 301, and the transition area is located between the first pocket area 302 and the first gas pocket area 303. The second aluminum-plastic film 119 is overlapped with the second overlapping portion 403, and an edge of the second aluminum-plastic film 119 is connected to an edge of the second overlapping portion 403 to form the second space 304.

The first pocket area 302 and the second pocket area 305 will eventually be located on a left side of a second straight line 502, the second gas pocket area 306 and the transition area will be located between the second straight line 502 and the first straight line 501, and the first gas pocket area 303 will be located on the right side of the first straight line 501.

As shown in FIG. 14, the cell assembly 112 further includes a first isolation adhesive 405, a second isolation adhesive 406, and a third isolation adhesive 407.

The first isolation adhesive 405 is connected to a side of the separator 123 facing away from the first aluminum-plastic film 118, and a side edge of the separator 123 away from the first cell 121 and a side edge of the first aluminum-plastic film 118 away from the first cell 121 are adhered and sealed by the first isolation adhesive 405. The first isolation adhesive 405 has a melting point higher than a melting point of a heat-sealing layer of the first aluminum-plastic film 118. The heat-sealing layer of the first aluminum-plastic film 118 is made of polypropylene (PP). The first isolation adhesive 405 includes one or more of acrylic resin, polycarbonate, polyurethane, and rubber. As shown in FIG. 14, in an embodiment, a length of the first isolation adhesive 405 in a second direction is equal to a length of the separator 123 in the second direction, a right side edge of the first isolation adhesive 405 is overlapped with a right side edge of the separator 123, and a length of the first isolation adhesive 405 in a third direction is less than a length of the separator 123 in the third direction.

As shown in FIG. 14, two second isolation adhesives 406 are provided, and the two second isolation adhesives 406 are overlapped with each other. One of the second isolation adhesives 406 is connected to a side of the first aluminum-plastic film 118 facing the separator 123 and is located at an end of the first overlapping portion 401 away from the first cell 121. The other of the second isolation adhesives 406 is connected to a side of the separator 123 facing the first aluminum-plastic film 118 and is located at an end of the second overlapping portion 403 away from the first cell 121. The second isolation adhesive 406 has a melting point higher than a melting point of a heat-sealing layer of the second aluminum-plastic film 119. The heat-sealing layer of the second aluminum-plastic film 119 is also made of polypropylene, and the material of the second isolation adhesive 406 can be the same as the material of the first isolation adhesive 405.

As shown in FIG. 14, two third isolation adhesives 407 are provided, and the two third isolation adhesives 407 are overlapped with each other. One of the third isolation adhesives 407 is connected to a side of the separator 123 facing the second aluminum-plastic film 119, and the other of the third isolation adhesives 407 is connected to a side of the second aluminum-plastic film 119 facing the separator 123. The second pocket area 305, the third isolation adhesive 407, and the second isolation adhesive 406 are sequentially arranged at intervals along a third direction. The third isolation adhesive 407 has a melting point higher than the melting point of the heat-sealing layer of the second aluminum-plastic film 119. The material of the third isolation adhesive 407 can be the same as the material of the first isolation adhesive 405.

Referring to FIG. 14, a user may first respectively heat-seal a left side edge, a front side edge, and a rear side edge of the first aluminum-plastic film 118 with a left side edge, a front side edge, and a rear side edge of the separator 123.

Then, the user introduces the first electrolyte solution through an opening formed by the right side edge of the first aluminum-plastic film 118 and the right side edge of the separator 123. After the introduction of the first electrolyte solution is completed, the user heat-seals the portion of the first aluminum-plastic film 118 corresponding to the first isolation adhesive 405 with the right side edge of the separator 123, thereby sealing the opening to form the sealed first space 301.

A heating platen for heat sealing has a temperature higher than the melting point of the heat-sealing layer, and the first isolation adhesive 405, the second isolation adhesive 406, and the third isolation adhesive 407 have the melting points higher than the temperature of the heating platen. Due to the presence of the first isolation adhesive 405, when the right side edge of the first aluminum-plastic film 118 and the right side edge of the separator 123 are heat-sealed, the heating platen is not in direct contact with the separator 123, which is conducive to reducing the impact of the high temperature of the heating platen on the separator 123 and also conducive to preventing the separator 123 from contaminating the heating platen.

In some other embodiments, the first isolation adhesive 405 may also be configured to have other shapes or sizes. For example, in order to further reduce the risk of direct contact between the heating platen and the second peripheral portion 404 of the separator 123, the shape and size of the first isolation adhesive 405 are the same as those of the second peripheral portion 404 of the separator 123, and the first isolation adhesive 405 and the second peripheral portion 404 are completely overlapped with each other. For another example, the first isolation adhesive 405 may be configured in a shape of "]" (similar to a square bracket) having an opening facing to the left, a left side edge of the first isolation adhesive 405 coincides with the first straight line 501 in the drawing. As such, when the front side edge and the rear side edge of the first aluminum-plastic film 118 are heat-sealed by the heating platen, the heating platen is less likely to come into direct contact with the second peripheral portion 404, and the risk of contamination of the heating platen by the separator 123 is low.

Similarly, a user may first respectively heat-seal a left side edge, a front side edge, and a rear side edge of the second aluminum-plastic film 119 with a left side edge, a front side edge, and a rear side edge of the second overlapping portion 403. Then, the user introduces the second electrolyte solution through an opening formed by the right side edge of the second aluminum-plastic film 119 and the separator 123. After the introduction of the second electrolyte solution is completed, the user heat-seals the right side edge of the second aluminum-plastic film 119 with the right side edge of the second overlapping portion 403 to form the sealed second space 304.

Due to the presence of the second isolation adhesive 406, when the right side edge of the second aluminum-plastic film 119 and the right side edge of the second overlapping portion 403 are heat-sealed, the second isolation adhesive 406 is not melted, the right side edge of the first overlapping portion 401 is separated from the separator 123 by the second isolation adhesive 406, and the second isolation adhesive 406 prevents the right side edge of the first overlapping portion 401 from being adhered. This ensures that the first pocket area 302 and the first gas pocket area 303 are in communication with each other, thereby ensuring that the vacuumizing of the first space 301 can be performed smoothly. It should be noted that to reduce costs, in some embodiments, one of the above two second isolation adhesives 406 may be omitted. Compared with the arrangement of only one second isolation adhesive 406, the arrangement of two second isolation adhesives 406 is conducive to further reducing the risk of undue adhesion between the first aluminum-plastic film 118 and the separator 123.

After the vacuumizing of the first space 301 is completed, the first pocket area 302 needs to be sealed. In this case, the heating platen presses the cell assembly 112, and the position of the heating platen is overlapped with the position of the third isolation adhesive 407. Due to the presence of the third isolation adhesive 407, although the first pocket area 302 is sealed, the second overlapping portion 403 is separated from the second aluminum-plastic film 119 by the third isolation adhesive 407, and the second aluminum-plastic film 119 and the second overlapping portion 403 do not adhere to each other. This ensures that the second gas pocket area 306 and the second pocket area 305 are in communication with each other, thereby ensuring that the subsequent vacuumizing of the second space 304 can be performed smoothly. To reduce costs, in some other embodiments, one of the two third isolation adhesives 407 may be omitted. Compared with the arrangement of only one third isolation adhesive 407, the arrangement of two third isolation adhesives 407 is conducive to further reducing the risk of undue adhesion between the second aluminum-plastic film 119 and the separator 123.

For a pouch battery 100 including two cells 112, in another embodiment, the first gas pocket area 303 may be cut off first. In another embodiment, the method for manufacturing a pouch battery 100 includes the following steps.

S40', which is the same as S40 of the previous embodiment, so the details will not be repeated herein.

S41', which is the same as S41 of the previous embodiment, so the details will not be repeated herein.

S42', which is the same as S42 of the previous embodiment, so the details will not be repeated herein.

S43', after vacuumizing the first space 301, sealing the first pocket area 302 and then cutting off the first gas pocket area 303.

S44', after cutting off the first gas pocket area 303, puncturing the second gas pocket area 306 and vacuumizing the second space 304.

S45', after vacuumizing the second space 304, sealing the second pocket area 305 and then cutting off the second gas pocket area 306. After cutting off the second gas pocket area 306, the first aluminum-plastic film 118 and the second aluminum-plastic film 119 form an aluminum-plastic film packaging structure 101. The specific structure of the aluminum-plastic film packaging structure 101 is as described above.

S46', which is the same as S46 of the previous embodiment, so the details will not be repeated herein.

The pouch battery 100 manufactured by the method of this embodiment (steps S40' to S46') has a low risk of explosion and a high safety. In addition, in the method of this embodiment, the first gas pocket area 303 and the second gas pocket area 306 are punctured successively, and the first space 301 and the second space 304 are vacuumized successively. In the method of this embodiment, the two gas pocket areas are not punctured simultaneously, and the first space 301 and the second space 304 are not vacuumized simultaneously, which is conducive for a user to determine an electrolyte solution retention coefficient of the first cell 121 and an electrolyte solution retention coefficient of the second cell 122. In the description of the present disclosure, the description with reference to the terms "an embodiment", "some embodiments", "exemplary embodiments", "example", "specific example", or "some examples" and so on means the specific features, structures, materials or characteristics described in connection with the embodiment or example, and these specific features, structures, materials or characteristics are included in at least one embodiment or example of the present disclosure. In this specification, exemplary descriptions of the foregoing terms do not necessarily refer to the same embodiment or example. Moreover, the described specific features, structures, materials, or characteristics may be combined in any suitable manner in one or more embodiments.

## Claims

1. A pouch battery, comprising a cell, an aluminum-plastic film packaging structure, and an adhesive layer, wherein the cell comprises a cell body and a tab which are connected with each other, and the aluminum-plastic film packaging structure comprises:
a main body, internally provided with a cavity, and the cell body is accommodated in the cavity; and
a sealing area, connected to an outer edge of the main body, surrounding an entire perimeter of the main body, and configured to seal the cavity, wherein an outer edge of the sealing area comprises a first side edge and a vent area, a part of the tab extends from the first side edge to outside of the aluminum-plastic film packaging structure, two ends of the vent area are respectively connected to two ends of the first side edge, a part of the vent area is covered by the adhesive layer, and a rest part of the vent area is exposed outside the adhesive layer.

2. The pouch battery of claim 1, wherein the vent area comprises a second side edge, a third side edge, and a fourth side edge, the third side edge is opposite to the first side edge, the second side edge is opposite to the fourth side edge, the second side edge and the fourth side edge are respectively located on two sides of the first side edge, and the adhesive layer covers the second side edge, the third side edge, and the fourth side edge; and
the vent area further comprises:
a first connecting edge, wherein two ends of the first connecting edge are respectively connected to the first side edge and the second side edge, an angle between the first connecting edge and either the first side edge or the second side edge is an obtuse angle, and the first connecting edge is exposed outside the adhesive layer; and/or
a second connecting edge, wherein two ends of the second connecting edge are respectively connected to the second side edge and the third side edge, an angle between the second connecting edge and either the second side edge or the third side edge is an obtuse angle, and the second connecting edge is exposed outside the adhesive layer; and/or
a third connecting edge, wherein two ends of the third connecting edge are respectively connected to the third side edge and the fourth side edge, an angle between the third connecting edge and either the third side edge or the fourth side edge is an obtuse angle, and the third connecting edge is exposed outside the adhesive layer; and/or
a fourth connecting edge, wherein two ends of the fourth connecting edge are respectively connected to the fourth side edge and the first side edge, an angle between the fourth connecting edge and either the first side edge or the fourth side edge is an obtuse angle, and the fourth connecting edge is exposed outside the adhesive layer.

3. The pouch battery of claim 2, wherein the vent area comprises the first connecting edge, the second connecting edge, the third connecting edge, and the fourth connecting edge; and
the sealing area is bent in such a manner that the first connecting edge, the second connecting edge, the third connecting edge, and the fourth connecting edge lie on a first plane; and
at least one of the first side edge, the second side edge, the third side edge, and the fourth side edge lies in a second plane, and the first plane and the second plane are parallel to each other.

4. The pouch battery of claim 2, wherein the vent area comprises a first connecting edge, and an angle between the second connecting edge and either the first side edge or the second side edge is 135°; and/or
the vent area comprises a second connecting edge, and an angle between the second connecting edge and either the second side edge or the third side edge is 135°; and/or
the vent area comprises a third connecting edge, and an angle between the second connecting edge and either the third side edge or the fourth side edge is 135°; and/or
the vent area comprises a fourth connecting edge, and an angle between the second connecting edge and either the fourth side edge or the first side edge is 135°.

5. The pouch battery of claim 2, wherein the cell is a laminated cell, the cell comprises the first connecting edge, the second connecting edge, the third connecting edge, and the fourth connecting edge, the cell is provided with four chamfered corners, and the four chamfered corners are respectively arranged corresponding to the first connecting edge, the second connecting edge, the third connecting edge, and the fourth connecting edge.

6. The pouch battery of claim 1, wherein the adhesive layer is an insulator.

7. The pouch battery of claim 1, wherein the adhesive layer is a solidified ultraviolet-curing adhesive.

8. The pouch battery of claim 1, wherein the pouch battery further comprises a separator and an electrolyte solution, the separator is located in the cavity, the cavity is separated into two sub-cavities by the separator, two cells are provided, the two cells are respectively arranged in different sub-cavities, a part of the electrolyte solution is contained in one of the sub-cavities, a rest part of the electrolyte solution is contained in the other sub-cavity, and the separator is configured to obstruct passage of the electrolyte solution.

9. The pouch battery of claim 1, wherein the aluminum-plastic film packaging structure is formed by a first aluminum-plastic film and a second aluminum-plastic film connected to each other, a central area of the first aluminum-plastic film and a central area of the second aluminum-plastic film are stacked to form the main body, and a peripheral area of the first aluminum-plastic film and a peripheral area of the second aluminum-plastic film are stacked together and are connected to each other to form the sealing area; and
the pouch battery further comprises a tab adhesive connected to the tab, wherein the tab adhesive is sandwiched between the first aluminum-plastic film and the second aluminum-plastic film, and arranged at the first side edge.

10. A method for manufacturing a pouch battery, comprising:
placing a cell between a first aluminum-plastic film and a second aluminum-plastic film, and connecting a part of an edge of the first aluminum-plastic film and a part of an edge of the second aluminum-plastic film;
introducing an electrolyte solution into the cell, and performing a first sealing on the first aluminum-plastic film and the second aluminum-plastic film;
after the first sealing, performing formation, puncturing of a gas pocket, vacuumizing, a second sealing, and cutting of the gas pocket in sequence; after the gas pocket is cut off, connecting the first aluminum-plastic film and the second aluminum-plastic film to form an aluminum-plastic film packaging structure, wherein the aluminum-plastic film packaging structure comprises a main body and a sealing area, the main body is internally provided with a cavity, the cell body is accommodated in the cavity, the sealing area is connected to an outer edge of the main body, the sealing area surrounds an entire perimeter of the main body, the sealing area is configured to seal the cavity, an outer edge of the sealing area comprises a first side edge and a vent area, a part of a tab of the cell extends from the first side edge to outside of the aluminum-plastic film packaging structure, and two ends of the vent area are respectively connected to two ends of the first side edge; and
arranging an adhesive layer in the vent area, such that a part of the vent area is covered by the adhesive layer and a rest part of the vent area is exposed outside the adhesive layer.

11. The method for manufacturing the pouch battery of claim 10, further comprising:
after the gas pocket is cut off and before the adhesive layer is arranged, cutting four corners of the aluminum-plastic film packaging structure having a rectangular shape, such that the vent area comprises a first connecting edge, a second side edge, a second connecting edge, a third side edge, a third connecting edge, a fourth side edge, and a fourth connecting edge connected in sequence, the third side edge is opposite to the first side edge, the second side edge is opposite to the fourth side edge, the second side edge and the fourth side edge are respectively located on two sides of the first side edge, an end of the first connecting edge away from the second side edge is connected to the first side edge, and an end of the fourth connecting edge away from the fourth side edge is connected to the first side edge;
wherein the step of arranging the adhesive layer in the vent area comprises: covering the second side edge, the third side edge, and the fourth side edge with the adhesive layer, and exposing at least one of the first connecting edge, the second connecting edge, the third connecting edge, and the fourth connecting edge outside the adhesive layer.

12. The method for manufacturing the pouch battery of claim 11, further comprising:
after arranging the adhesive layer, bending the sealing area, such that the first connecting edge, the second connecting edge, the third connecting edge, and the fourth connecting edge lie on a first plane, and at least one of the first side edge, the second side edge, the third side edge, and the fourth side edge lies in a second plane, wherein the first plane and the second plane are parallel to each other.

13. A method for manufacturing a pouch battery, comprising:
preparing a cell assembly, wherein the cell assembly comprises a separator, a first cell, a second cell, a first electrolyte solution, and a second electrolyte solution, the second electrolyte solution is the same as the first electrolyte solution, a first aluminum-plastic film and the separator are connected to each other to form a first space which is closed, the first space comprises a first pocket area and a first gas pocket area which are communicated with each other, the first cell and the first electrolyte solution are located in the first pocket area, the first aluminum-plastic film and a second aluminum-plastic film are respectively arranged on different sides of the separator, the second aluminum-plastic film and the separator are connected to each other to form a second space which is closed, the separator is configured to prevent the first electrolyte solution from flowing from the first space to the second space, the separator is further configured to prevent the second electrolyte solution from flowing from the second space to the first space, the second space is separated from the first space, the second space comprises a second pocket area and a second gas pocket area which are communicated with each other, the second cell and the second electrolyte solution are located in the second pocket area, and the first gas pocket area is staggered from the second gas pocket area;
performing formation on the cell assembly;
after the formation is completed, puncturing the first gas pocket area and vacuumizing the first space;
after vacuumizing the first space, sealing the first pocket area;
after sealing the first pocket area, puncturing the second gas pocket area and vacuumizing the second space;
after vacuumizing the second space, sealing the second pocket area and then cutting off the first gas pocket area and the second gas pocket area; and
after cutting off the second gas pocket area, arranging an adhesive layer in a vent area, such that a part of the vent area is covered by the adhesive layer and a rest part of the vent area is exposed outside the adhesive layer,
wherein after cutting off the second gas pocket area, the first aluminum-plastic film and the second aluminum-plastic film form an aluminum-plastic film packaging structure, wherein the aluminum-plastic film packaging structure comprises a sealing area, an outer edge of the sealing area comprises a first side edge and a vent area, a part of a tab of the first cell extends from the first side edge to outside of the aluminum-plastic film packaging structure, and two ends of the vent area are respectively connected to two ends of the first side edge.

14. The cell assembly of claim 13, wherein the cell assembly further comprises a first isolation adhesive, the first isolation adhesive is connected to a side of the separator facing away from the first aluminum-plastic film, the first isolation adhesive is located at an end of the separator away from the first cell, and the first isolation adhesive has a melting point higher than a melting point of a heat-sealing layer of the first aluminum-plastic film.

15. The cell assembly of claim 13, wherein the cell assembly comprises a second isolation adhesive, and the second isolation adhesive has a melting point higher than a melting point of a heat-sealing layer of the second aluminum-plastic film, wherein
one second isolation adhesive is provided, and the second isolation adhesive is connected to a side of the first aluminum-plastic film facing the separator and is located at an end of a first overlapping portion away from the first cell; or
one second isolation adhesive is provided, and the second isolation adhesive is connected to a side of the separator facing the first aluminum-plastic film and is located at an end of a second overlapping portion away from the first cell; or
two second isolation adhesives are provided, the two second isolation adhesives are overlapped with each other, one of the second isolation adhesives is connected to a side of the first aluminum-plastic film facing the separator and is located at an end of a first overlapping portion away from the first cell, and the other of the second isolation adhesives is connected to a side of the separator facing the first aluminum-plastic film and is located at an end of a second overlapping portion away from the first cell.

16. The cell assembly of claim 15, wherein the cell assembly further comprises a third isolation adhesive, the third isolation adhesive has a melting point higher than the melting point of the heat-sealing layer of the second aluminum-plastic film, and the second pocket area, the third isolation adhesive, and the second isolation adhesive are sequentially arranged at intervals along a third direction, wherein
one third isolation adhesive is provided, and the third isolation adhesive is connected to a side of the separator facing the second aluminum-plastic film; or
one third isolation adhesive is provided, and the third isolation adhesive is connected to a side of the second aluminum-plastic film facing the separator; or
two third isolation adhesives are provided, the two third isolation adhesives are overlapped with each other, one of the third isolation adhesives is connected to a side of the separator facing the second aluminum-plastic film, and the other of the third isolation adhesives is connected to a side of the second aluminum-plastic film facing the separator.

17. A method for manufacturing a pouch battery, comprising:
preparing a cell assembly, wherein the cell assembly comprises a separator, a first cell, a second cell, a first electrolyte solution, and a second electrolyte solution, the second electrolyte solution is the same as the first electrolyte solution, a first aluminum-plastic film and the separator are connected to each other to form a first space which is closed, the first space comprises a first pocket area and a first gas pocket area which are communicated with each other, the first cell and the first electrolyte solution are located in the first pocket area, the first aluminum-plastic film and a second aluminum-plastic film are respectively arranged on different sides of the separator, the second aluminum-plastic film and the separator are connected to each other to form a second space which is closed, the separator is configured to prevent the first electrolyte solution from flowing from the first space to the second space, the separator is further configured to prevent the second electrolyte solution from flowing from the second space to the first space, the second space is separated from the first space, the second space comprises a second pocket area and a second gas pocket area which are communicated with each other, the second cell and the second electrolyte solution are located in the second pocket area, and the first gas pocket area is staggered from the second gas pocket area;
performing formation on the cell assembly;
after the formation is completed, puncturing the first gas pocket area and vacuumizing the first space;
after vacuumizing the first space, sealing the first pocket area and then cutting off the first gas pocket area;
after the first gas pocket area is cut off, puncturing the second gas pocket area and vacuumizing the second space;
after vacuumizing the second space, sealing the second pocket area and then cutting off the second gas pocket area; and
after cutting off the second gas pocket area, arranging an adhesive layer in a vent area, such that a part of the vent area is covered by the adhesive layer and a rest part of the vent area is exposed outside the adhesive layer,
wherein after cutting off the second gas pocket area, the first aluminum-plastic film and the second aluminum-plastic film form an aluminum-plastic film packaging structure, wherein the aluminum-plastic film packaging structure comprises a sealing area, an outer edge of the sealing area comprises a first side edge and a vent area, a part of a tab of the first cell extends from the first side edge to outside of the aluminum-plastic film packaging structure, and two ends of the vent area are respectively connected to two ends of the first side edge.
